# EUROPEAN PATENT APPLICATION

(11) **EP 4 592 927 A1**
(43) Date of publication of application: **30.07.2025**
(21) Application number: 25152681.0
(22) Date of filing: 17.01.2025
(51) Int. Cl.: G06Q 10/20, B64F 5/60, G05B 23/02, G07C 5/00

(54) **METHOD OF GENERATING HEALTH ASSESSMENT OF AN ASSET**

(30) Priority: 24.01.2024 US 202418421459
(71) Applicant: General Electric Company, Cincinnati, Ohio 45215 (US)
(72) Inventor: WISEMAN, Matthew William, Fairfield, 45011 (US); CLEMENTS, Brian Russell, Evendale, 45215 (US); KOUNS, Darwin, Evendale, 45215 (US)
(74) Representative: Openshaw & Co.

(57) **Abstract**

A method of generating a health assessment of an asset based on one or more index values (110). The method includes receiving, by a first computer system (100), a first set of data including environmental data (102) and a second set of data including operating data (104), calculating localized environmental data (106) from the first set of data and the second set of data, generating one or more index values (110) based on the localized environmental data (106), receiving, by a second computer system (120), the one or more index values (110) and a third set of data including operational data (112) of the asset, and performing health assessment of the asset using an analytical model (114), based on the one or more index values (110), and the third set of data, to estimate a health of the asset, determining a future health (116) or condition of the asset, and outputting recommended actions to perform maintenance to the asset.

## Description

### TECHNICAL FIELD

The present disclosure relates generally to health assessment of an asset and, in particular, to a method of generating a health assessment of an asset while suppressing location information of the asset.

### BACKGROUND

Analytics are developed and used to estimate current or predicted engine health conditions for use in maintenance scheduling, fleet management, and overhaul workscope optimization. The performance of these analytics is often dependent on knowing the conditions in which the engine is operating. For example, knowing that an engine is being operated in geographic areas with extreme temperatures, heavy sand or dust content, etc., allows for models to take these factors into account and to improve accuracy in condition assessment or predictive ability.

Conventionally, an airline or an aircraft operator provides location data of an aircraft, for example, takeoff location and landing location, or the location during the entire flight path. With this information, a Prognostics and Health Management (PHM) practitioner or an operations center can use various sources of data on atmospheric conditions to bring together the information (temperatures, particulates, sand, etc.) needed for the model. However, it can be challenging to obtain the location data, due to airline privacy policies, pilot union agreements, military operational security, etc.

### BRIEF DESCRIPTION OF THE DRAWINGS

The foregoing and other features and advantages will be apparent from the following, more particular, description of various exemplary embodiments, as illustrated in the accompanying drawings, wherein like reference numbers generally indicate identical, functionally similar, and/or structurally similar elements.
FIG. 1 is a flow chart of a method of generating a health assessment of an asset based on one or more index values associated with environmental factors, according to an embodiment of the present disclosure.
FIG. 2 is a schematic diagram of a communication between an asset (e.g., an aircraft) and a first computer system and a second computer system, according to an embodiment of the present disclosure.
FIG. 3 is a schematic diagram of a computer system for implementing the methods of generating a health assessment of an asset based on one or more index values associated with environmental factors, according to an embodiment of the present disclosure.

### DETAILED DESCRIPTION

Features, advantages, and embodiments of the present disclosure are set forth or apparent from a consideration of the following detailed description, drawings, and claims. Moreover, the following detailed description is exemplary and intended to provide further explanation without limiting the scope of the disclosure as claimed.

Various embodiments of the present disclosure are discussed in detail below. While specific embodiments are discussed, this is done for illustration purposes only. A person skilled in the relevant art will recognize that other components and configurations may be used without departing from the spirit and the scope of the present disclosure.

Embodiments of the present disclosure seek to provide a method of transforming the environmental factors of interest into one or more index values representing severity levels of environmental factors of interest. Based on databases, the one or more index values are associated with geographic locations and environmental content. An operator can translate the location into a corresponding one or more index values. Providing the one or more index values allows the model, configured to using the one or more index values instead of actual environmental values, to account for exposure, without the operator needing to reveal location information. Hence, by providing the one or more index values, the location information can be suppressed or even hidden.

This allows for a step-change improvement in analytics capability, especially for those analytics that infer conditions based on exposure to external conditions like environmental factors, deployed for customers that are not willing to share location information. For example, sharing location information may violate union contracts, infringe on privacy of an entity, hurt competitive advantage, or reveal strategic military operations. Therefore, connecting asset exposure associated with geographic location without revealing the location itself provides a clear advantage over previous methods. The present method can be used, for example, by location-dependent operators like mobile airborne assets.

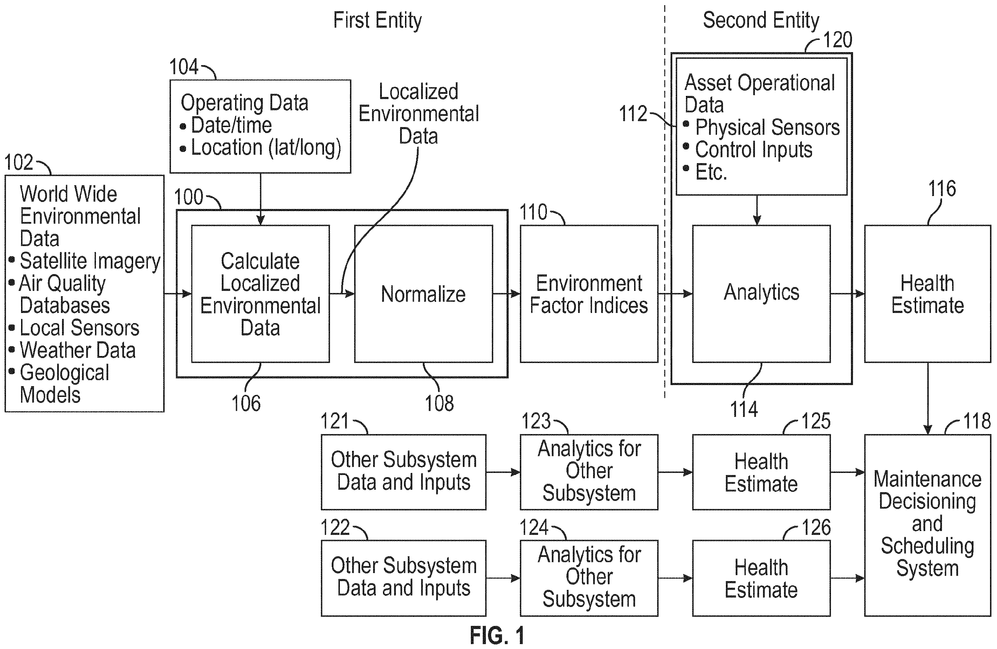

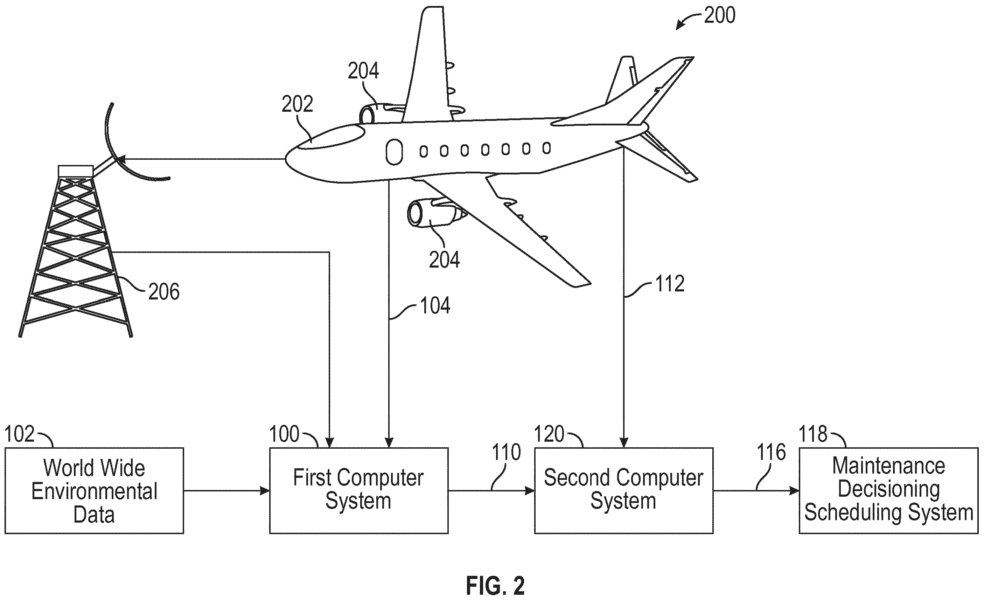

FIG. 1 is a flow chart of a method of generating a health assessment of an asset based on one or more index values associated with environmental factors and location information, according to an embodiment of the present disclosure. FIG. 2 is a schematic diagram of a communication between an asset 200 (e.g., an aircraft 202) and a first computer 100 and a second computer system 120, according to an embodiment of the present disclosure. The method includes receiving, by the first computer system 100, a first set of data including environmental data 102 (e.g., worldwide environmental data). In an embodiment, the environmental data 102 includes satellite remote sensing (e.g., satellite imagery) and air quality databases. In another embodiment, the environmental data 102 includes environmental data from individual or local sensors at specific geographical areas of interest. In yet another embodiment, the environmental data includes environmental weather data or geological models.

The method further includes receiving, by the first computer system 100, a second set of data including operating data 104 such as operating time (e.g., date and/or time) and location data (e.g., latitude and longitude) from the asset 200. In an embodiment, as shown in FIG. 2, the asset can be an aircraft 202 having one or more engines 204. In an embodiment, the asset can also be one or more engines 204 of the aircraft 202 or any other system of the aircraft 202 (e.g., landing gear, wing, etc.). In an embodiment, the asset 200 can be airborne. In an embodiment, the asset 200 can be mobile. In an embodiment, the asset 200 can be a fleet, a squadron, or one or more aircrafts. In another embodiment, the asset 200 can be a land-based asset, such as a truck or a train at a fixed location or mobile, or a water-based asset, such as a boat, a submarine or a water-based battleship, at a fixed location or mobile. In yet another embodiment, the asset 200 can be a utility system or a module such as a power generation system (e.g., a turbine) or a water treatment system. The utility system (e.g., power generation system and/or the water treatment) can be civilian or military for which location may be suppressed or hidden for secrecy reasons, for example.

In an embodiment, the operating data 104 can be obtained directly from the asset 200 (e.g., the aircraft 202) or from an intermediary system 206 such as an air traffic control system that is in communication with the asset 200 (e.g., the aircraft 202, the land-based asset, or the water-based asset) and has access to the operating time (e.g., date and/or time) and location data (e.g., latitude and longitude) of the asset 200. In an embodiment, the first computer system 100 can interface with the asset 200 (e.g., the one or more aircrafts 202, the land-based asset, or the water-based asset) or the intermediary system 206 to download the operating data 104 directly from the asset 200 or from the intermediary system 206. The term "download" is used broadly to mean receiving the operating data 104 by the first computer system 100 with or without sending a request for the operating data 104 by the first computer system 100 to the asset 200 or to the intermediary system 206.

In an embodiment, part of a health condition or deterioration level of an asset is influenced by the environment in which the asset operates. In an embodiment, the environmental data 102 is associated with a given location and time, and may be obtained through the use of satellite remote sensing (e.g., satellite imagery), or air quality databases, or any combination thereof. The environmental data 102 may include various environmental factors including, but not limited to, physical or chemical elements or contaminants, dust, sand, particulate matter, specific chemical and/or physical composition of particulate matter (e.g., chemical reactivity, particulate size, particulate density, etc.). The physical and/or chemical elements or contaminants can be, for example, acid rain, volcanic ash, wildfire smoke, soot, hail, sleet, or mixtures thereof. The environmental data 102 can be obtained from one or more remote sensing satellites or air quality databases, or obtained from ground receiving stations located throughout the world and in communication with the one or more remote sensing satellites or obtained from air quality databases located throughout the world (e.g., air quality databases managed by the U.S. Environmental Protection Agency), etc.

The method further includes calculating, by the first computer system 100, localized environmental data 106 from first set of data and the second set of data. The method further includes normalizing 108 the localized environmental data 106. The method further includes generating one or more index values 110, after normalizing of the localized environmental data 106. In an embodiment, the calculating, by the first computer system 100, localized environmental data 106 from first set of data and the second set of data is performed using, for example, a neural network or an algebraic equation. In an embodiment, an example index that can be generated would be related to the concentration of fine particulate matter PM_{2.5} in air due to a nearby forest fire. If a threshold of 500 micrograms per cubic meter is selected as the normalizing level, the index value would be equal to 1. If, for example, a concentration PM_{2.5} in air is measured to be 350 micrograms per cubic meter in the morning, then the index value would be set to 0.7 (i.e., 350/500). If, for example, later in the day, the measurement of the concentration of PM_{2.5} in air is 400 micrograms per cubic meter, the index value would be set to 0.8 (i.e., 400/500).

The method includes receiving, by the second computer system 120, the one or more index values 110. The method further includes receiving, by the second computer system 120, a third set of data comprising operational data 112 of the asset 200, such as, for example, engine and aircraft operational data, or operational data of a land-based system or a water-based system, etc. In an embodiment, the operational data 112 comprises physical sensors data, control inputs data, etc. In an embodiment, physical sensors data includes, for example, air pressure, air temperature. In an embodiment, the control inputs data includes rotor speed, altitude of aircraft, roll, pitch, yaw, accelerometer data, throttle, steering mechanism, etc.

The method further includes performing a health assessment of the asset 200, by the second computer system 120, using analytics or an analytical model 114, based on the one or more index values 110, and the third set of data including the operational data 112. In an embodiment, the analytical model 114 can be part of a health management system for the asset 200. In an embodiment, the analytical model 114 can be configured to evaluate the current health or condition of the asset 200. In an embodiment, the current health estimate may include determining a remaining amount of useful life or a remaining usable service capability. In an embodiment, the evaluating the current health or condition of the asset 200 includes evaluating a durability of parts of the asset 200, evaluating consumables such as filters, etc. In an embodiment, the analytical model 114 can be configured to analyze how the asset 200 has been operated and in what environment. The analytical model can then infer the health based on usage of the asset 200. For example, if the asset 200 is a submarine, the analytical model 114 can be configured to infer the health of the submarine based on how fast and how many depth charges the submarine has been subjected to. The analytical model 114 can be configured to take into account historical operation of the asset 200 (e.g., the aircraft 202, vehicle, etc.), knowledge of material and stresses put during operation.

In an embodiment, the amount of remaining useful life may be used to match the asset 200 with other similarly "remaining life" assets for asset aggregation. In an embodiment, the analytical model 114 may generate or predict future health 116 or condition of the asset 200. In an embodiment, the prediction of the future health 116 of the asset 200 or condition of the asset 200 may include estimating time horizon of useful life of the asset 200. The estimated future health 116 is input into a maintenance decisioning and scheduling system 118. In an embodiment, the method further includes recommending actions to perform maintenance to the asset 200 using the maintenance decisioning and scheduling system 118. The maintenance decisioning and scheduling systems system 118 takes the health estimate or health estimates 116 (future health) and makes a maintenance recommendation for the asset 200. The maintenance recommendation can be performed manually or can also be automated through a computer program. In an embodiment, recommending actions to perform maintenance of the asset 200 includes removing components (e.g., engine or engines 204) of the asset 200, repairing components of the asset 200, replacing components of the asset 200, or any combination thereof. In an embodiment, an accuracy of the analytical model improves when designed using factors from the operating environment as inputs in a form of one or more index values. In an embodiment, using the analytical model, at 114, may include using a machine learning algorithm or a data analytics algorithm.

In an embodiment, the asset 200 (e.g., engine 204, aircraft 202, fleet, squadron, ship, submarine, train, truck, a utility system) may include multiple subsystems that have subsystem operating data and inputs 121 and 122. For example, a first subsystem of the asset may have a first subsystem operating data and inputs 121 and a second subsystem of the asset may have a second subsystem operating data and inputs 122. The first subsystem data and inputs 121 and the second subsystem data and inputs 122 can be, for example, sensor data. The first subsystem operating data and inputs 121 may be used as an input to first analytics (analytical model) 123 and the second subsystem operating data and inputs 122 may be used as an input to second analytics (analytical model) 124. The first analytics 123 may output a first health estimate 125 and the second analytics 124 may output a second health estimate 126 similar to the analytics (analytical model) 114 outputting the future health estimate 116.

In an embodiment, the various future health estimates 116, 125 and 126 of the various subsystems of the asset can be used by the maintenance decisioning and scheduling system 118 to make a maintenance recommendation for the asset. The multiple flow lines leading to the maintenance decisioning and scheduling system 118 show that multiple subsystems of the asset can have the first analytics 123 and the second analytics 124 that work in parallel in addition to the analytics (analytical model) 114 which takes the environmental factor indices 110 as an input. FIG. 1 illustrates the fact that analytics (including the analytics 114, the analytics 123 and the analytics 124) can take data from multiple sources (not just environmental indices 110).

In an embodiment, the environmental factors may be reduced to a quantitative metric or a measurement representing severity of the environment. In an embodiment, the environmental factors can be grouped into a single severity index value. In an embodiment, the environment factors can be separated into a plurality of index values, each of the plurality of index values corresponding to one or more group of environmental factors. For example, the environmental factors or the environmental data 102, including the satellite imagery and/or air quality databases, can be grouped into or assigned a single severity index value. For example, a dusty environment together with a windy location can be assigned a single severity index value (e.g., ten). Alternatively, the environmental factors or the environmental data 102, including the satellite imagery and/or air quality databases, can be assigned a plurality of index values. In this case, for example, the dusty environment can be assigned a specific severity index value (e.g., six) and the windy location can be assigned another index value (e.g., five).

In an embodiment, an owner of the asset 200 may not want to share the operational location of the asset 200. In an embodiment, a knowledge of asset operation location may represent a tactical, strategic, or security advantage/vulnerability (e.g., military), or a high-net-worth operator (e.g., a celebrity, a company executive, etc.), or a commercial operator. In an embodiment, knowledge of asset operation location may also represent a competitive commercial advantage or disadvantage.

In an embodiment, the second computer system 120, using the analytical model 114, transforms the one or more index values 110, using the operational data 112 of the asset 200, into the prediction of the future health 116 or condition of the asset 200. For example, a representative nominal flight of an aircraft, with no atmospheric smoke content (index is equal to zero), the remaining useful life of a specific component is decreased by 1 life unit. When the smoke content is measured and an index value assigned (for example, the index is equal to 0.7), the remaining useful life is decreased by 1.003 units. For an analytic model that is not adapted to use a smoke index, for example, a worst-case scenario is assumed, and the life is decreased by 1.01 units, for example. However, these index values can be defined as needed depending on the parameter of interest, such as, for example, smoke particulate matter, sand particulate matter, etc. There are multiple ways such an index could be used in a model. For example, the environmental index can be used as an additional independent variable in the analytic model for predicting the health of the asset.

In an embodiment of the present disclosure, the method brings together the physics of the asset response to environmental factors, the knowledge of environmental factors, and the analytic dependence on the one or more environmental index values.

In an embodiment, the method can be provided to the operator of the asset 200 to allow local or "on-premises" transformation of location into a relevant one or more index values. The method can be implemented as a standalone tool in a ground-based computer system, as an application that can be hosted by the operator in a ground-based information technology (IT) infrastructure, or on a portable device (e.g., a laptop computer, a tablet, a smartphone, etc.). In another embodiment, the method can be implemented as an application or an algorithm hosted on the asset 200 itself. For example, the method can be implemented as an application or an algorithm on the first computer system 100 that can be provided on the asset 200 itself (e.g., the aircraft 202, a land-based asset, or a water-based asset). In an embodiment, the first computer system 100 is located on the asset, and generating, by the first computer system 100, the one or more index values based on the environmental data 102 is performed at the asset 200. In an embodiment, the first computer system 100 includes a navigational computer located on the asset 200 (e.g., the aircraft 202, truck, ship, etc.). The navigational computer can have access to databases of environmental data sets. The navigational computer can use the environmental data sets to calculate the index values 110.

In an embodiment, the first computer system 100 is associated with a first entity, such as the operator of the asset 200 (e.g., the military), and the second computer system 120 is associated with a second entity, such as an analytics provider.

In an embodiment, the first computer system 100 is distinct and separate from the second computer system 120. The term "distinct and separate" is used herein to mean that the first computer system 100 and the second computer system 120 are not part of the same system and my not be connected to each other. However, the first computer system 100 and the second computer system 120 can also be part of a larger computer system. The first computer system 100 outputs the one or more index values, at 110, and the one or more index values are input into the second computer system 120.

For example, the operator, using the first computer system 100, determines one or more environmental factors that influence the condition or deterioration of the asset 200. Each factor (sand, dust, ash, hail, etc.) is turned into an index corresponding to a severity of the factor. Using local measurements and access to environmental factor databases, the operator runs an analytics provider-provided tool that uses location to associate the environmental factors severity number. These severity numbers are then provided to the analytics provider, at the second computer system 120, for running the analytical model without revealing the source location information.

Operators of the asset 200 are asked to provide location information as to where their fleet, or individual assets, are being operated, in order to assess current asset condition or history of degradation. Further, the operator may be asked to provide information about intended future operational location to aid in predictive analytics. This location information is used, in conjunction with additional databases, to ascertain the levels of relevant environmental factors used by the analytic. The analytics can make better estimates or predictions of asset condition when accounting for environmental factors.

Therefore, in an embodiment, the second entity (e.g., the analytics provider) retains visibility to the analytics, inputs, and results. If an analytics provider is willing to provide the analytics to the operator, and have no further involvement, then the location information could be provided directly to the analytics without the operator providing that location to a third party.

Therefore, in an embodiment, the present method transforms the environmental factors of interest into one or more index values 110 representing severity levels of the factors of interest. Based on databases, the one or more index values are associated with geographic locations and environmental content. The first entity (e.g., operator of the asset) can translate the location into a corresponding one or more index values 110. The first entity can provide the one or more index values 110 to the second entity without the first entity needing to reveal location information of the asset 200 to the second entity. Hence, by providing the one or more index values 110 to the second entity, the location information is hidden from the second entity. In an embodiment, the location information is only accessed by the first entity. The first entity can be for example a government entity (e.g., military) or high asset entity (political person or famous person with a high public profile) that, for security and/or privacy reasons, does not wish to divulge the location information of the asset or the location where the asset traveled to or operated in. The first entity operates the first computer system 100 and the second entity operates the second computer system 120.

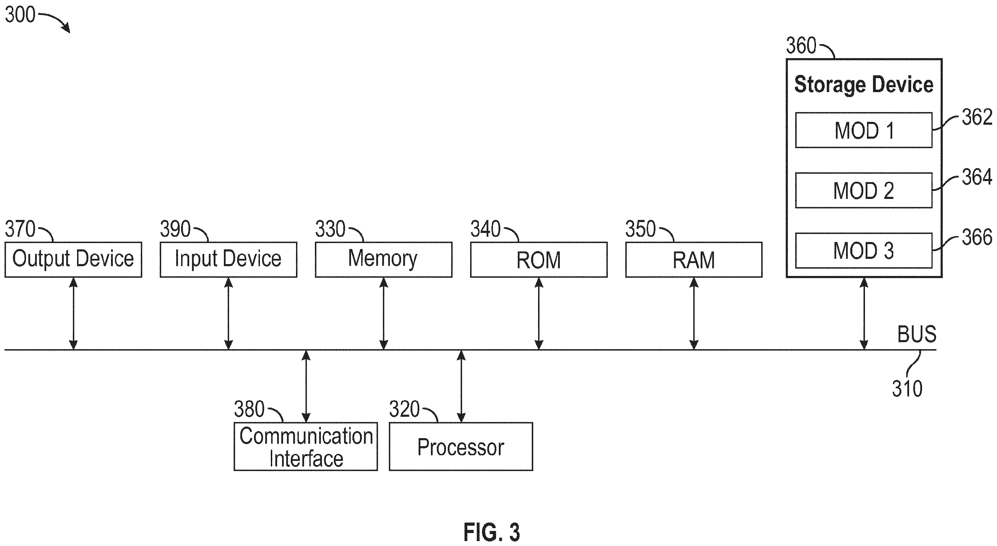

FIG. 3 is a schematic diagram of a computer system 300 for implementing the methods of generating a health assessment of the asset based on one or more index values associated with environmental factors and location information, according to an embodiment of the present disclosure. The computer system 300 can include the first computer system 100, the second computer system 120, or both. With reference to FIG. 2, the computer system 300 includes a general-purpose computing device, including a central processing unit (a CPU or a processor) 320 and a system bus 310 that couples various system components including a memory 330 such as a read-only memory (ROM) 340 and a random-access memory (RAM) 350 to the processor 320. The computer system 300 can include a cache of high-speed memory connected directly with, in close proximity to, or integrated as part of the processor 320. The computer system 300 copies data from the memory 330 and/or the storage device 360 to the cache for quick access by the processor 320. In this way, the cache provides a performance boost that avoids processor 320 delays while waiting for data. These and other modules can control or be configured to control the processor 320 to perform various actions. Other memory 330 may be available for use as well. The memory 330 can include multiple different types of memory with different performance characteristics. The disclosure may operate on a computer system 300 with more than one processor 320 or on a group or cluster of computing devices networked together to provide greater processing capability. The processor 320 can include any general-purpose processor and a hardware module or a software module, such as module 1, 362, module 2, 364, and module 3, 366 stored in storage device 360, configured to control the processor 320 as well as a special-purpose processor where software instructions are incorporated into the actual processor design. The processor 320 may essentially be a completely self-contained computer system, containing multiple cores or processors, a bus, a memory controller, a cache, etc. A multi-core processor may be symmetric or asymmetric.

The system bus 310 may be any of several types of bus structures including a memory bus or a memory controller, a peripheral bus, and a local bus using any of a variety of bus architectures. A basic input/output (BIOS) stored in memory ROM 340, or the like, may provide the basic routine that helps to transfer information between elements within the computer system 300, such as during start-up. The computer system 300 further includes storage device 360 such as a hard disk drive, a magnetic disk drive, an optical disk drive, a tape drive, or the like. The storage device 360 can include software modules 362, 364, and 366 for controlling the processor 320. Other hardware or software modules are contemplated. The storage device 360 is connected to the system bus 310 by a drive interface. The drives and the associated computer-readable storage media provide nonvolatile storage of computer-readable instructions, data structures, program modules, and other data for the computer system 300. In one aspect, a hardware module that performs a particular function includes the software component stored in a tangible computer-readable storage medium in connection with the necessary hardware components, such as the processor 320, the system bus 310, the output device 370 (e.g., display), and so forth, to carry out the function. In another aspect, the system can use a processor and a computer-readable storage medium to store instructions that, when executed by a processor (e.g., one or more processors), cause the processor to perform a method or other specific actions. The basic components and appropriate variations are contemplated depending on the type of device, such as whether the computer system 300 is a small, handheld computing device, a desktop computer, or a computer server.

Although the exemplary embodiment described herein employs the storage device 360 such as a hard disk, other types of computer-readable media that can store data that are accessible by a computer, such as magnetic cassettes, flash memory cards, digital versatile disks, cartridges, random access memories (RAMs) 350, and read-only memory (ROM) 340, may also be used in the exemplary operating environment. Tangible computer-readable storage media, computer-readable storage devices, or computer-readable memory devices, expressly exclude media such as transitory waves, energy, carrier signals, electromagnetic waves, and signals, per se.

To enable user interaction with the computer system 300, an input device 390 represents any number of input mechanisms, such as a microphone for speech, a touch-sensitive screen for a gesture or a graphical input, a keyboard, a mouse, motion input, speech, and so forth. An output device 370 can also be one or more of a plurality of output mechanisms known to those of skill in the art. In some instances, multimodal systems enable a user to provide multiple types of input to communicate with the computer system 300. The communications interface 380 generally governs and manages the user input and the system output. There is no restriction on operating on any particular hardware arrangement and, therefore, the basic features here may easily be substituted for improved hardware or firmware arrangements as they are developed.

The technology discussed herein refers to computer-based systems and actions taken by, and information sent to and from, computer-based systems. One of ordinary skill in the art will recognize that the inherent flexibility of computer-based systems allows for a great variety of possible configurations, combinations, and divisions of tasks and functionality between and among components. For instance, processes discussed herein can be implemented using a single computing device or multiple computing devices working in combination. Databases, memory, instructions, and applications can be implemented on a single system or distributed across multiple systems. Distributed components can operate sequentially or in parallel.

Embodiments of the present disclosure provide a method of transforming the environmental factors of interest into one or more index values representing severity levels of environmental factors of interest. Based on databases, the one or more index values are associated with geographic locations and environmental content. An operator can translate the location into a corresponding one or more index values. Providing the one or more index values allows the model, configured to using the one or more index values instead of actual environmental values, to account for exposure, without the operator needing to reveal location information. Hence, by providing the one or more index values, the location information can be suppressed or even hidden. For example, sharing location information may violate union contracts, infringe on privacy of an entity, hurt competitive advantage, or reveal strategic military operations. Therefore, connecting asset exposure associated with geographic location without revealing the location itself provides a clear advantage over previous methods. The present method can be used, for example, by location-dependent operators like mobile airborne assets.

This allows for a step-change improvement in analytics capability, especially for those analytics that infer conditions based on exposure to external conditions like environmental factors, deployed for customers that are not willing to share location information.

Further aspects of the present disclosure are provided by the subject matter of the following clauses.

A method of generating a health assessment of an asset based on one or more index values associated with environmental data and location data. The method includes (a) receiving, by a first computer system, a first set of data including environmental data, (b) receiving, by the first computer system, a second set of data including operating data having an operating time and location data from the asset, (c) calculating, by the first computer system, localized environmental data from the first set of data and the second set of data, (d) generating, by the first computer system, one or more index values based on the localized environmental data, (e) receiving, by a second computer system, the one or more index values, (f) receiving, by the second computer system, a third set of data comprising operational data of the asset, (g) performing health assessment of the asset, by the second computer system, using an analytical model, based on the one or more index values, and the third set of data, to estimate a health of the asset, (h) determining, by the second computer system, a future health or condition of the asset based on the estimated health of the asset, and (i) outputting, by the second computer system, recommended actions to perform maintenance to the asset.

The method of the preceding clause, wherein the environmental data includes data from satellite remote sensing, air quality databases, from individual local sensors at specific geographical areas, or from weather or geological models, or any combination thereof.

The method of any preceding clause, further including adjusting operating parameters of the asset in order to extend remaining useful life or avoid reliability issues based on the future health or condition of the asset.

The method of any preceding clause, further including performing preventive maintenance on the asset in order to extend remaining useful life or avoid reliability issues based on the future health or condition of the asset.

The method of any preceding clause, wherein recommending actions to perform maintenance of the asset includes removing components of the asset, repairing components of the asset, replacing components of the asset, or any combination thereof.

The method of any preceding clause, wherein the operating time includes a date or a time, or both, of operation of the asset, and the location data includes a latitude location and a longitude location of the asset.

The method of any preceding clause, wherein the environmental data is associated with a given location of the asset and a given time of the asset or environmental exposure induced locally by the asset, and the environmental data is obtained from satellite remote sensing, air quality databases, or from individual sensors at specific geographical areas, weather data, or geological models, or any combination thereof.

The method of any preceding clause, wherein the environmental data includes physical or chemical elements or contaminants, or particulate matter, or any combination thereof.

The method of any preceding clause, wherein the operational data of the asset includes physical sensors data, control input data, or any combination thereof.

The method of any preceding clause, wherein the asset is an aircraft, a fleet or a squadron, a land-based asset, a water-based asset, or a utility system.

The method of any preceding clause, wherein the analytical model is part of a health management system for the asset, or the analytical model is configured to evaluate a current health or condition of the asset, or both.

The method of any preceding clause, wherein the first computer system is distinct and separate from the second computer system, and the first computer system or the second computer system, or both, are ground-based computer systems or portable devices.

The method of any preceding clause, further including normalizing the localized environmental data, and generating the one or more index values after normalizing of the localized environmental data.

The method of any preceding clause, wherein performing the health assessment of the asset, by the second computer system, using the analytical model, based on the one or more index values, and the third set of data to estimate the health of the asset includes determining a remaining amount of useful life or a remaining usable service capability of the asset.

The method of any preceding clause, further including using the remaining amount of the useful life of the asset to match the asset with other assets having a similar remaining amount of the useful life, for asset aggregation.

The method of any preceding clause, wherein performing the health assessment of the asset, by the second computer system, using the analytical model, based on the one or more index values, and the third set of data to estimate the health of the asset includes predicting, using the analytical model, a future health, or a condition of the asset.

The method of any preceding clause, wherein the first computer system is located on the asset, and generating, by the first computer system, the one or more index values based on the localized environmental data is performed at the asset.

The method of any preceding clause, wherein the first computer system is associated with a first entity and the second computer system is associated with a second entity different from the first entity, wherein the first entity is a high-net-worth operator, a commercial operator, or a military operator.

The method of any preceding clause, wherein the first entity provides the one or more index values to the second entity without the first entity needing to reveal location information of the asset to the second entity.

The method of any preceding clause, wherein the operating data is obtained directly from the asset or from an intermediary system that is in communication with the asset and has access to the operating time and location data of the asset.

The method of any preceding clause, further including interfacing the first computer system with the asset or the intermediary system that is in communication with the asset and has access to the operating time and location data of the asset to download the operating data directly from the aircraft or from the intermediary system.

A non-transitory computer-readable medium storing a computer-executable code that, when executed by the first computer system and the second computer system, causes the first computer system and the second computer system to perform the method of any preceding clause.

A method of generating a health assessment of an asset based on one or more index values associated with environmental factors and location information. The method includes (a) receiving, from a first computer system, one or more index values, by a second computer, the one or more index values being calculated, by the first computer system, from a first set of data including environmental data and a second set of data including operating data having operating time and location data from the asset, (b) receiving, by the second computer system, a third set of data comprising operational data of the asset, (c) performing health assessment of the asset, by the second computer system, using an analytical model, based on the one or more index values, and the third set of data, to estimate a health of the asset, (d) determining, by the second computer system, a future health or condition of the asset based on the estimated health of the asset, and (e) outputting, by the second computer system, recommended actions to perform maintenance to the asset.

A system of generating a health assessment of an asset based on one or more index values associated with environmental data and location data, the system configured to implement the method of any preceding clause.

A non-transitory computer-readable medium storing a computer-executable code that, when executed by a computer system causes the computer system to perform a method of generating a health assessment of an asset based on one or more index values associated with environmental factors and location information of any preceding clause.

A non-transitory computer-readable medium storing a computer-executable code that, when executed by a second computer system, causes the second computer system to perform a method of generating a health assessment of an asset based on one or more index values associated with environmental factors and location information. The method includes (a) receiving, from a first computer system, one or more index values, by a second computer, the one or more index values being calculated, by the first computer system, from a first set of data including environmental data and a second set of data including operating data having operating time and location data from an asset, (b) receiving, by the second computer system, a third set of data including aircraft operational data of the asset, (c) performing health assessment of the asset, by the second computer system, using an analytical model, based on the one or more index values, and the third set of data, to estimate a health of the asset, (d) determining, by the second computer system, a future health or condition of the asset based on the estimated health of the asset, and (e) outputting, by the second computer system, recommended actions to perform maintenance to the asset.

Although the foregoing description is directed to the preferred embodiments of the present disclosure, other variations and modifications will be apparent to those skilled in the art, and may be made without departing from the spirit or the scope of the disclosure. Moreover, features described in connection with one embodiment of the present disclosure may be used in conjunction with other embodiments, even if not explicitly stated above.

## Claims

1. A method of generating a health assessment of an asset based on one or more index values (110) associated with environmental data (102) and location data, the method comprising:
receiving, by a first computer system (100), a first set of data including environmental data (102);
receiving, by the first computer system (100), a second set of data including operating data (104) having an operating time and location data from the asset;
calculating, by the first computer system (100), localized environmental data (106) from the first set of data and the second set of data;
generating, by the first computer system (100), one or more index values (110) based on the localized environmental data (106);
receiving, by a second computer system (120), the one or more index values (110) from the first computer system (100);
receiving, by the second computer system (120), a third set of data comprising operational data (112) of the asset;
performing health assessment of the asset, by the second computer system (120), using an analytical model (114), based on the one or more index values (110), and the third set of data, to estimate a health of the asset;
determining, by the second computer system (120), a future health (116) or condition of the asset based on the estimated health of the asset; and
outputting, by the second computer system (120), recommended actions to perform maintenance to the asset.

2. The method of claim 1, wherein the environmental data (102) includes data from satellite remote sensing, air quality databases, from individual local sensors at specific geographical areas, or from weather or geological models, or any combination thereof.

3. The method of any preceding claim, further comprising adjusting operating parameters of the asset or performing preventive maintenance on the asset in order to extend remaining useful life or to avoid reliability issues based on the future health (116) or the condition of the asset.

4. The method of any preceding claim, wherein recommending actions to perform maintenance of the asset comprises removing components of the asset, repairing components of the asset, replacing components of the asset, or any combination thereof.

5. The method of any preceding claim, wherein the operating time comprises a date or a time, or both, of operation of the asset, and the location data comprises a latitude location and a longitude location of the asset.

6. The method of any preceding claim, wherein the environmental data (102) is associated with a given location of the asset and a given time of the asset or environmental exposure induced locally by the asset, and the environmental data (102) is obtained from satellite remote sensing, air quality databases, or from individual sensors at specific geographical areas, weather data, or geological models, or any combination thereof.

7. The method of any preceding claim, wherein the environmental data (102) comprises physical or chemical elements or contaminants, or particulate matter, or any combination thereof, or the operational data (112) of the asset comprises physical sensors data, control input data, or any combination thereof.

8. The method of any preceding claim, wherein the asset is an aircraft, a fleet or a squadron, a land-based asset, a water-based asset, or a utility system.

9. The method of any preceding claim, wherein the analytical model (114) is part of a health management system for the asset, or the analytical model (114) is configured to evaluate a current health or condition of the asset, or both.

10. The method of any preceding claim, wherein the first computer system (100) is distinct and separate from the second computer system (120), and the first computer system (100) or the second computer system (120), or both, are ground-based computer systems or portable devices, and optionally, the first computer system (100) is located on the asset, and generating, by the first computer system (100), the one or more index values (110) based on the localized environmental data (106), is performed at the asset.

11. The method of any preceding claim, further comprising normalizing (108) the localized environmental data (106) and generating the one or more index values (110) after normalizing (108) of the localized environmental data (106).

12. The method of any preceding claim, wherein performing the health assessment of the asset, by the second computer system (120), using the analytical model (114), based on the one or more index values (110), and the third set of data to estimate the health of the asset, comprises predicting, using the analytical model (114), a future health (116) or condition of the asset.

13. The method of any preceding claim, wherein performing the health assessment of the asset, by the second computer system (120), using the analytical model (114), based on the one or more index values (110), and the third set of data to estimate the health of the asset, comprises determining a remaining amount of useful life or a remaining usable service capability of the asset, and optionally further comprising using the remaining amount of the useful life of the asset to match the asset with other assets having a similar remaining amount of useful life, for asset aggregation.

14. The method of any preceding claim, wherein the first computer system (100) is associated with a first entity and the second computer system (120) is associated with a second entity different from the first entity, wherein the first entity is a high-net-worth operator, a commercial operator, or a military operator, and optionally wherein the first entity provides the one or more index values (110) to the second entity without the first entity needing to reveal location information of the asset to the second entity.

15. A non-transitory computer-readable medium storing a computer-executable code that, when executed by a second computer system (120), causes the first computer system (100) and the second computer system (120) to perform the method of any preceding claim.
